# EUROPÄISCHE PATENTANMELDUNG

(11) **EP 2 628 573 A2**
(43) Veröffentlichungstag der Anmeldung: **21.08.2013**
(21) Anmeldenummer: 13450008.1
(22) Anmeldetag: 07.02.2013
(51) Int. Cl.: B25H 1/14

(54) **Anordnung bei Montageplätzen**

(30) Priorität: 17.02.2012 AT 2022012
(71) Anmelder: Werkzeug-Vertriebs GmbH Nfg. Kg, 1230 Wien (AT)
(72) Erfinder: Linshalm, Elmar, 1230 Wien (AT); Rusosld, Arnold, 1100 Wien (AT); Hubacek, Mag. Roland, 2102 Hagenbrunn (AT)
(74) Vertreter: Rippel, Andreas

(57) **Zusammenfassung**

Bei einer Anordnung bei Montageplätzen, denen die zu montierenden Teile (18, 31, 32) auf Tischen, Platten oder dgl. geliefert werden, liegt auf dem Tisch oder dgl. eine durch eine transparente Schutzfolie (6, 16, 26) abgedeckte Fotofolie (1, 10, 21), wobei jedes Foto (2, 3, 4, 17, 27, 29, 30) den jeweiligen zu montierenden Teil (18, 31, 32, 33) am Platz, an dem dieser abzulegen ist, zeigt, und jedes Foto (2, 3, 4, 17, 27, 29, 30) mit einem dem jeweiligen Teil zugeordneten Code (12, 13, 14, 19, C27, C28, C29, C30) versehen ist, der auch auf dem Teil (18, 31, 32) angebracht ist.

Dadurch wird der Montagevorgang und eine Kontrolle erleichtert.

## Beschreibung

Die Erfindung bezieht sich auf eine Anordnung bei Montageplätzen, denen die zu montierenden Teile auf Tischen, Platten oder dgl. geliefert werden.

Eine Arbeitsvorbereitung entlastet die Werkstatt von Überlegungen über Verfahrenswahl, Maschinenwahl, Materialbereitstellung etc. und ermöglicht die Konzentration aller in der Fertigung bzw. Montage Beschäftigten auf die Fertigungsausführung.

Die Materialbereitstellung zu einem Montageplatz erfolgt in üblicher Weise auf Tischen, Platten oder dgl. Die Plazierung der zu montierenden Teile auf den Tischen, Platten und dgl. ist dabei sehr oft willkürlich und es ist nicht einfach die jeweilige Entnahme zu überprüfen, die Entnahme der Materialbuchhaltung zu melden und die rechtzeitige Belieferung mit Material in erforderlicher Menge und Güte zu sichern.

Die Erfindung hat es sich zum Ziel gesetzt, eine Anordnung der eingangs genannten Art zu schaffen, welche eine einfache und genaue Materialplanung ermöglicht.

Erreicht wird dies dadurch, dass auf dem Tisch oder dgl. eine durch eine transparente Schutzfolie abgedeckte Fotofolie liegt, wobei jedes Foto den jeweiligen zu montierenden Teil am Platz, an dem dieser abzulegen ist, zeigt, und jedes Foto mit einem dem jeweiligen Teil zugeordneten Code versehen ist,der auch auf dem Teil angebracht ist.

Bei einer erfindungsgemäßen Anordnung ist sofort ersichtlich, ob ein bestimmter Teil fehlt und daher schon montiert ist. Die Plätze für die einzelnen Teile sind eindeutig zugeordnet, sodass der Monteur den jeweiligen Teil auf dem Tisch oder der Platte nicht suchen muss und es ist für die Materialplanung anhand der Code's leicht, für eine rechtzeitige Belieferung mit Teilen zu sorgen. Die zu montierenden Teile werden im Folgenden Montageteile genannt.

Die Verwendung von Fotofolien in Ordnungssystemen für Werkzeuge ist bekannt. Die erfindungsgemäße Anwendung bei Montageplätzen ist jedoch neu und auch nicht naheliegend.

Im Rahmen der Anordnung nach der Erfindung kann der Code ein Nummerncode, ein Barcode, ein QR-Code oder ein RFID-Chip sein.

Es ist auch zweckmäßig, wenn die Fotofolie mit einem Code versehen ist.

Nachstehend ist die Erfindung anhand von in den Zeichnungen dargestellten Ausführungsbeispielen näher beschrieben ohne auf diese Beispiele beschränkt zu sein.
- Fig. 1: eine schaubildliche Ansicht eines Teiles einer Fotofolie mit darüberliegender Schutzfolie;
- Fig. 2: eine schaubildliche Ansicht eines Teiles einer Fotofolie mit darüberliegender Schutzfolie mit einem darauf liegenden Montageteil sowie einem Foto mit RFID-Chip;
- Fig. 3: eine auf einen Tisch aufzulegende Einheit aus Fotofolie und Schutzfolie mit teilweise darauf liegenden Montageteilen.

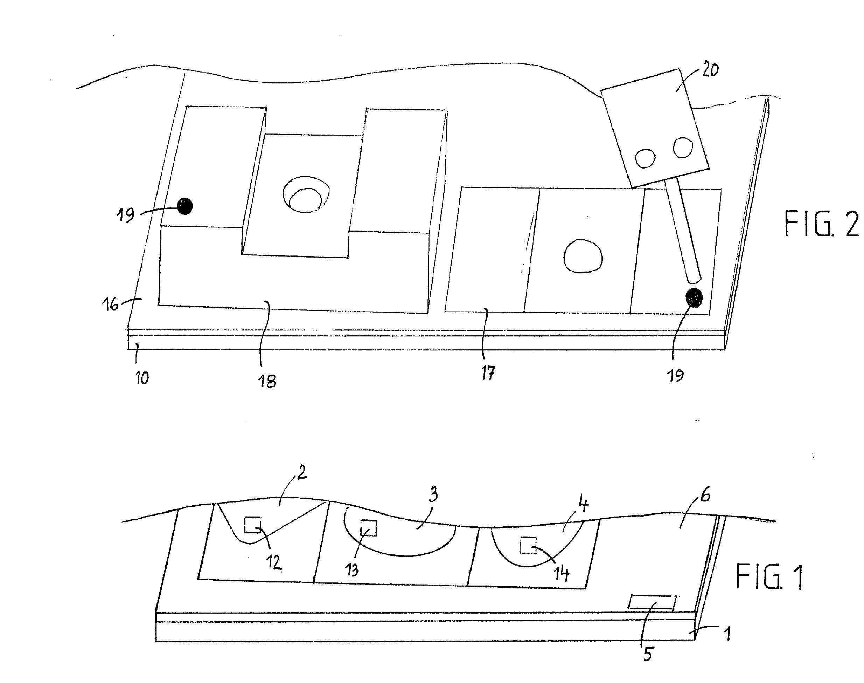

Gemäß Fig. 1 sind auf einer Fotofolie 1 Abbildungen 2, 3 und 4 von Montageteilen ersichtlich, welche an einem Montageplatz zu montieren sind. Jeder Abbildung 2, 3 und 4 ist ein Code 12, 13 und 14 zugeordnet. Ein Code 5 bezeichnet die Fotofolie 1.

Abgedeckt wird die Fotofolie 1 durch eine transparente Schutzfolie 6.

Die Abbildungen 2, 3 und 4 stellen jene Montageteile dar, die auf dem durch die jeweilige Abbildung bezeichneten Platz liegen sollen.

Die in Fig. 2 dargestellte Fotofolie 10, die durch eine transparente Schutzfolie 16 abgedeckt ist, gibt nur zwei Abbildungen 17 wieder, wobei auf der einen Abbildung 17 der zugehörige Montageteil 18 liegt.

Im gezeichneten Beispiel ist als Code ein RFID-Chip 19 angeordnet, der durch einen RFID-Reader 20 gelesen werden kann. Der gleiche Code 19 (RFID-Chip) ist auch auf dem Montageteil 18 angeordnet.

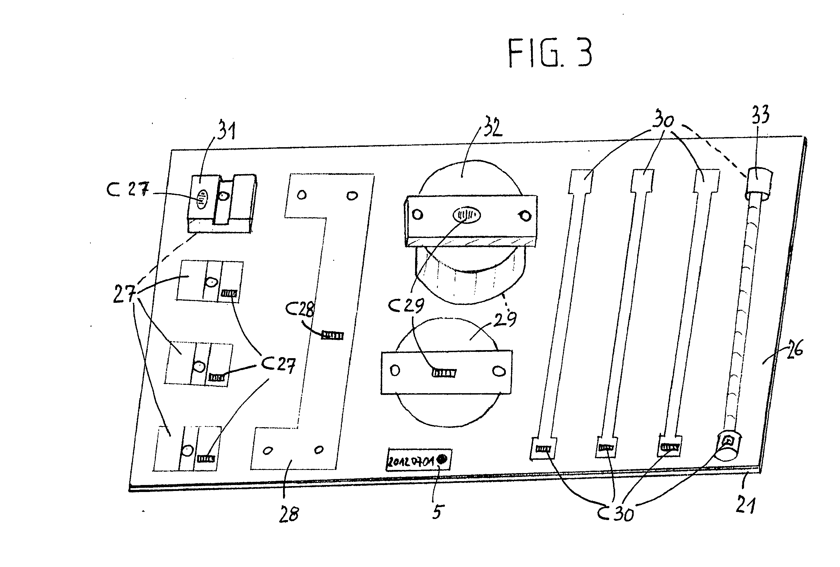

In Fig. 3 ist eine Fotofolie 21 dargestellt, die durch eine transparente Schutzfolie 26 abgedeckt ist. Auf der Fotofolie 21 sind vier Abbildungen von Montageteilen 27, eine Abbildung eines Montageteiles 28, zwei Abbildungen eines Montageteiles 29 und vier Abbildungen von Montageteilen 30 enthalten. Auf einer Abbildung 27 liegt ein Montageteil 31, auf einer Abbildung 29 liegt ein Montageteil 32 und auf einer Abbildung 30 liegt ein Montageteil 33.

Die jeweiligen Abbildungen sind mit Bar-Codes C27, C28, C29 und C30 versehen. Auf den Montageteilen 31, 32, 33 sind die zugehörigen Bar-Codes C27, C29 und C30 angebracht.

Die Fotofolien liegen auf Tischen oder Platten auf, welche sich bei den einzelnen Montageplätzen befinden. Der Monteur bzw. ein Kontrollorgan kann anhand der Abbildungen auf den Fotofolien leicht feststellen, ob der jeweilige Montageteil schon montiert ist, bzw. kann eine Nachbestellung erfolgen. Eine solche Nachbestellung ist dabei anhand der den Abbildungen zugeordneten Codes sehr leicht möglich.

Im Rahmen der Erfindung sind zahlreiche Abänderungen möglich. Als Code kann jeder Nummerncode, Bar-Code, ein QR-Code oder ein RFID-Chip verwendet werden. Die Größe der Fotofolien und damit die Anzahl der möglichen Montageteile hängt von den Platzverhältnissen am Montageplatz ab.

## Patentansprüche

1. Anordnung bei Montageplätzen, denen die zu montierenden Teile (18, 31, 32) auf Tischen, Platten oder dgl. geliefert werden, **dadurch gekennzeichnet, dass** auf dem Tisch oder dgl. eine durch eine transparente Schutzfolie (6, 16, 26) abgedeckte Fotofolie (1, 10, 21) liegt, wobei jedes Foto (2, 3, 4, 17, 27, 29, 30) den jeweiligen zu montierenden Teil (18, 31, 32, 33) am Platz, an dem dieser abzulegen ist, zeigt, und jedes Foto (2, 3, 4, 17, 27, 29, 30) mit einem dem jeweiligen Teil zugeordneten Code (12, 13, 14, 19,C27, C28, C29, C30) versehen ist, der auch auf dem Teil (18, 31, 32) angebracht ist.

2. Anordnung nach Anspruch 1, **dadurch gekennzeichnet, dass** der Code ein Nummerncode, ein Barcode, ein QR-Code oder ein RFID-Chip ist.

3. Anordnung nach Anspruch 1 oder 2, **dadurch gekennzeichnet, dass** die Fotofolie (1, 10, 21) mit einem Code (5) versehen ist.
